# EUROPEAN PATENT SPECIFICATION

(11) **EP 3 409 691 B1**
(45) Date of publication and mention of the grant of the patent: **02.10.2019**
(21) Application number: 17173805.7
(22) Date of filing: 31.05.2017
(51) Int. Cl.: C08B 1/00, C08B 15/02, D21C 9/00, D21H 11/18

(54) **PROCESS FOR THE PRODUCTION OF A NANOCELLULOSE MATERIAL**
VERFAHREN ZUR HERSTELLUNG VON NANOCELLULOSEMATERIAL
PROCÉDÉ DE PRODUCTION D'UN MATÉRIAU DE NANOCELLULOSE

(43) Date of publication of application: 05.12.2018
(73) Proprietor: SAPPI Biochemtech B.V., 6211 AA Maatricht (NL)
(72) Inventor: ENGLISH, Robert, Isle of Harris, Eilean Siar HS5 3UE (GB); HEATON, John, 6211 SN Maastricht (NL)
(74) Representative: Schmitz, Joseph

(56) References cited:
- WO-A1-2014/009517
- WO-A1-2015/128550
- MARÍA FRANCISCO ET AL: "Low-Transition-Temperature Mixtures (LTTMs): A New Generation of Designer Solvents", ANGEWANDTE CHEMIE INTERNATIONAL EDITION, vol. 52, no. 11, 10 February 2013 (2013-02-10), pages 3074-3085, XP055236102, ISSN: 1433-7851, DOI: 10.1002/anie.201207548

## Description

### TECHNICAL FIELD

The present invention relates to a process for the production of a nanocellulose material from a cellulosic precursor material.

### PRIOR ART

Cellulose is a material that is widely available from renewable sources such as plant material. Cellulose is present as a fiber in the primary cell wall of green plants, where it is usually found in a mixture with hemicellulose, lignin, pectin and other substances. The cellulose fiber itself consists of crystalline and amorphous regions, and the crystalline regions are known as cellulose nanofibers (CNF) and nanocrystalline cellulose (NCC), which can both be separated from the amorphous regions, and exhibit mechanical properties that make them highly suitable for reinforcing use in material applications and other applications where CNF or CNC gels are of use such as in cosmetics, for example as gels.

However, the production of either cellulose nanofibers (CNF) or nanocrystalline cellulose (NCC) from cellulosic material such as wood pulp is technically demanding and energy-intensive, which is why there is a constant desire in the field of producing either cellulose nanofibers (CNF) or nanocrystalline cellulose (NCC) in both an uncomplicated and an energy-efficient manner which does involve a minimum of hazardous chemicals.

EP 2 712 364 proposes that the swelling of the cellulosic precursor material in an aqueous solution of morpholine, piperidine or mixtures thereof can reduce the energy consumption by reducing the number of microfluidisation steps required to release the nanocellulose material from the cellulosic precursor by relying on the swelling agent property of aqueous morpholine and/or piperidine. However, the obtained aqueous suspension of nanocellulose must be further processed in order to yield a re-dispersible nanocellulose powder, which can be technically challenging. For instance, in the case where the nanocellulose obtained through said process is to be dried using supercritical fluids, the morpholine and piperidine must be removed beforehand because they tend to chemically react with the most commonly used supercritical fluids such as carbon dioxide and must be replaced by another inert processing fluid. In addition, morpholine and piperidine are hazardous substances which must be handled with care and which must be thoroughly removed from the nanocellulose material before commercialization, especially for pharmaceutical or food applications of nanocellulose.

In Green Chem., 2015, 17, 3401-3406, Sirviö et al. describe a pre-treatment of wood cellulose with choline chloride/urea as swelling agent before microfluidisation to release the nanofibrillated cellulose (NFC) from the pre-treated wood cellulose. However, before microfluidisation, the pre-treated wood cellulose is first washed with deionized water in order to remove the deep eutectic solvent after the pre-treatment and only then is the thus obtained aqueous suspension of pre-treated wood cellulose microfluidized. The thus obtained aqueous suspension of nanofibrillated cellulose (NFC) is then freeze-dried to prepare samples for further analysis. The removal of water from the nanocellulose by freeze-drying however yields nanocellulose that cannot easily be re-dispersed and having inferior rheological properties.

It is thus desirable to provide a simplified process for the manufacture of nanocellulose in which the overall energy can be reduced preferably without resorting to hazardous chemicals.

### SUMMARY OF THE INVENTION

The present invention provides for a process in which the energy consumption of the overall process for the production of a non-derivatized or derivatized nanocellulose material from a cellulosic fibrous material as raw material can be reduced and in which the process liquids used allow safer processing of the raw material and furthermore allows subsequent spray-drying with commonly used supercritical fluids without chemical reaction between the supercritical fluids and the liquid to be removed. The process yields a nanocellulose material in the form of a solid such as for example solid particulate material that can easily be re-dispersed in aqueous solutions to yield a homogenous dispersion of nanocellulose material, thereby forming for example a liquid or gel and which disperion is nearly identical with a freshly (i.e. a never-dried) prepared nanocellulose dispersion in terms of rheological properties. This can be achieved by using a swelling agent that is a low-transition-temperature mixture (LTTM) such as to form for example a deep eutectic solvent which is soluble in a processing solvent and where the processing solvent is non-solubilizing for both the cellulosic fibrous material that is used as raw material and the derivatized or non-derivatized nanocellulose material.

It is an object of the present invention to provide a process for the production of a non-derivatized or derivatized nanocellulose material from a cellulosic fibrous material, comprising the steps of:
a. providing a suspension of cellulosic fibrous material in a continuous phase of a non-aqueous process liquid comprising a swelling agent and a processing solvent;
b. allowing the cellulosic fibrous material to swell such as to form a suspension of swollen cellulosic fibrous material in a continuous phase of non-aqueous process liquid;
c. optionally refining said suspension of swollen cellulosic fibrous material in a continuous phase of non-aqueous process liquid to increase the fineness of the swollen cellulosic fibrous material;
d. removing the swelling agent from the process liquid such as to form a suspension of cellulosic fibrous material in a continuous phase of processing solvent;
e. subjecting the swollen and optionally refined cellulosic fibrous material to high-shear comminution such as to release of the non-derivatized nanocellulose material from the swollen and optionally refined cellulosic fibrous material and such as to form a dispersion of non-derivatized nanocellulose material in a continuous phase of a processing solvent;
f. contacting the dispersion of non-derivatized nanocellulose material in a continuous phase of a processing solvent with a supercritical fluid such as to remove the processing solvent and isolate the non-derivatized nanocellulose material, wherein the supercritical fluid is preferably supercritical carbon dioxide or ammonia;
characterized in that the swelling agent is a low-transition-temperature mixture (LTTM) and in particular a deep eutectic solvent and said low-transition-temperature mixture and in particular said deep eutectic solvent is soluble in the processing solvent and wherein the processing solvent is non-solubilizing for the cellulosic fibrous material and the non-derivatized nanocellulose material.

It is another object of the present invention to provide the use of a non-aqueous process liquid comprising a swelling agent and a processing solvent in a process for the production of a derivatized or non-derivatized nanocellulose material according to the above, characterized in that the swelling agent is a low-transition-temperature mixture (LTTM) and in particular a deep eutectic solvent and said low-transition-temperature mixture (LTTM) and in particular said deep eutectic solvent is soluble in the processing solvent and wherein the processing solvent is non-solubilizing for the cellulosic fibrous material and the non-derivatized nanocellulose material.

It is yet another object of the present invention to provide a derivatized or non-derivatized nanocellulose material obtained by a process according the above, having an aspect ratio of at least 100 and wherein the derivatized or non-derivatized nanocellulose material is preferably in the form of a solid such as for example solid particulate material like a powder.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

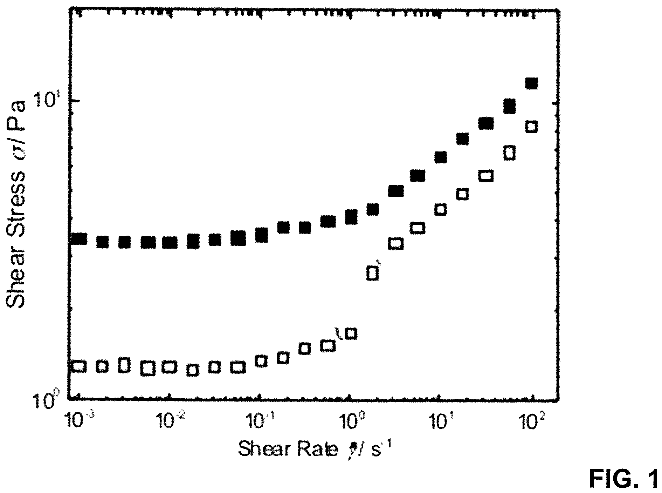

- Fig. 1: shows a graph in which the shear stress is shown in dependency of the shear rate for two samples of re-dispersed nanocellulose at consistency of 1% by weight. The filled symbols represent the re-dispersed nanocellulose spray dried from a suspension of nanocellulose in ethyl lactate according to the present invention and the open symbols represent the re-dispersed nanocellulose when spray dried from an aqueous suspension of nanoncellulose.

### DESCRIPTION OF PREFERRED EMBODIMENTS

In the context of the present application, the term "low transition temperature mixture" or "LTTM" refers to a liquid mixture of at least one hydrogen bond donor (HBD) and one hydrogen bond acceptor (HBA) counterpart that results in the formation of liquid mixture showing an unusually low freezing/melting point or glass transition point.

In the context of the present application, the term "deep eutectic solvents" or "DES" refers in particular to liquid mixtures of quaternary ammonium salts such as for example quaternary ammonium halide salts or guanidinium salts such as for example guanidinium halide salts, as hydrogen bond acceptor (HBA) in combination with one or more hydrogen bond donors (HBD) such as for example urea showing an unusually low freezing/melting point.

Exemplary hydrogen bond acceptors (HBA) are quaternary ammonium salts which are suitable for the formation of a deep eutectic solvent in combination with one or more hydrogen bond donors (HBD). Suitable quaternary ammonium salts are in particular quaternary ammonium halide salts such as choline chloride, (2-hydroxyethyl)dimethylethylammonium chloride, trimethylglycine and 2-(chlorocarbonyloxy)-N,N,N-trimethylethanaminium chloride or N-benzyl-2-hydroxy-N,N-dimethylethanaminium chloride.

Suitable hydrogen bond donors (HBD) that may be used for the formation of a deep eutectic solvent with quaternary ammonium halide salts are urea and derivatives thereof such as 1-methyl urea, 1,3-dimethyl urea or 1,1-dimethyl urea; thiourea and derivatives thereof, amides such as benzamide or acetamide and derivatives thereof; polyols such as glycerol, ethylene glycerol or propylene glycol, benzoic acid and derivatives thereof, dicarboxylic acids such as malonic acid, adipic acid, oxalic acid, succininc acid or citric acid, α-hydroxy carboxylic acid alkyl esters and derivatives thereof such as ethyl lactate.

In the context of the present invention, low transition temperature mixtures and deep eutectic solvents which are liquids at room temperature, i.e. which have a freezing/melting points below 25°C, are preferred for reasons of energy consumption of the process, since no energy is needed in this case to melt and keep the low transition temperature mixtures and deep eutectic solvents in a liquid state. It is however possible to use low transition temperature mixtures and deep eutectic solvents having a freezing/melting points of between 25°C and 95°C, and preferably between 25°C and 50°C.

It is an object of the present invention to provide a process for the production of a non-derivatized or derivatized nanocellulose material from a cellulosic fibrous material, comprising the steps of:
a. providing a suspension of cellulosic fibrous material in a continuous phase of a non-aqueous process liquid comprising a swelling agent and a processing solvent;
b. allowing the cellulosic fibrous material to swell such as to form a suspension of swollen cellulosic fibrous material in a continuous phase of non-aqueous process liquid;
c. optionally refining said suspension of swollen cellulosic fibrous material in a continuous phase of non-aqueous process liquid to increase the fineness of the swollen cellulosic fibrous material;
d. removing the swelling agent from the process liquid such as to form a suspension of cellulosic fibrous material in a continuous phase of processing solvent;
e. subjecting the swollen and optionally refined cellulosic fibrous material to high-shear comminution such as to release of the non-derivatized nanocellulose material from the swollen and optionally refined cellulosic fibrous material and such as to form a dispersion of non-derivatized nanocellulose material in a continuous phase of a processing solvent;
f. contacting the dispersion of non-derivatized nanocellulose material in a continuous phase of a processing solvent with a supercritical fluid such as to remove the processing solvent and isolate the non-derivatized nanocellulose material, wherein the supercritical fluid is preferably supercritical carbon dioxide or ammonia;
characterized in that the swelling agent is a low-transition-temperature mixture (LTTM) and in particular a deep eutectic solvent and said low-transition-temperature mixture and in particular said deep eutectic solvent is soluble in the processing solvent and wherein the processing solvent is non-solubilizing for the cellulosic fibrous material and the non-derivatized nanocellulose material.

In a preferred embodiment of the process according to the present invention, the swelling agent removed from the process liquid in step d. is used, i.e. recycled, to form the non-aqueous process liquid suspension of cellulosic fibrous material in step a..

In a preferred embodiment of the process according to the present invention, the processing solvent removed in step f. is used, i.e. recycled, to form the non-aqueous process liquid suspension of cellulosic fibrous material in step a..

In a more preferred embodiment of the process according to the present invention, the swelling agent removed in step d. and the processing solvent removed in step f. are used, i.e. recycled, to form the non-aqueous process liquid suspension of cellulosic fibrous material in step a.. This way, the process can be carried out more efficiently and preferably as a closed circuit with respect to swelling agent and processing solvent. Because in the present invention, the processing solvent is chosen such as to not chemically react with the supercritical fluid such as carbon dioxide and ammonia, the mixture of processing solvent and supercritical fluid that is removed can be easily separated by returning the mixture to a pressure and temperature at which the supercritical fluid returns to a gas state, thereby boiling off, and at which the processing solvent returns to a liquid state. Thus, also the fluid in a gas state can be used, i.e. recycled, to provide the supercritical fluid in step f.

In a preferred embodiment of the process according to the present invention, the low-transition-temperature mixture (LTTM) and in particular the deep eutectic solvent is a binary low-transition-temperature mixture (LTTM) and in particular a binary deep eutectic solvent, and preferably is a binary deep eutectic solvent of a quaternary ammonium salt with a hydrogen bond donor, more preferably of a quaternary ammonium halide salt such as a choline halide with a hydrogen bond donor chosen from urea or ethanolamine.

In a more preferred embodiment of the process according to the present invention, the swelling agent is a binary deep eutectic solvent of choline chloride and urea or choline chloride and ethanolamine, wherein the choline chloride and urea or ethanolamine are present in a molar ratio of 1:2.

In a preferred embodiment of the process according to the present invention, the swelling agent is a ternary deep eutectic solvent, and preferably is a ternary deep eutectic solvent of a quaternary ammonium salt such as choline halide with a binary hydrogen bond donor chosen from glycerol/DBN or glycerol/DBU in a molar ratio of 1:2:6

In a preferred embodiment of the process according to the present invention, the cellulosic fibrous material has a cellulose content of at least 90% by weight or is bleached chemical pulp preferably having a lignin content of less than 5% by weight and preferably has a lignin content of less than 1% by weight.

In a preferred embodiment the nanocellulose material obtained from the process according to the present invention may be in solid particulate form. This allows for simpler storage and dosing of the nanocellulose material.

In a preferred embodiment, the process according to the present invention yields a non-derivatized nanocellulose material from a cellulosic fibrous material or a derivatized nanocellulose material, depending on the chemical nature of the swelling agent and/or the processing solvent. It is however preferred that the chemical nature of the swelling agent and/or the processing solvent are such as to yield a non-derivatized nanocellulose material.

In a preferred embodiment of the process according to the present invention, the non-aqueous process liquid comprises of, or consists of, from 50 to 95 weight percent, preferably of from 75 to 95 weight percent of swelling agent and/or from 5 to 50 weight percent, preferably of from 5 to 25 weight percent of processing solvent, based on the weight of the non-aqueous process liquid. By including 50 or more weight percent of swelling agent in the non-aqueous process liquid, the swelling of the cellulosic fibrous material can be increased whereas the addition of the processing solvent helps to reduce the viscosity of the non-aqueous process liquid which allows for better refining in the ensuing refining step. Therefore, in a preferred embodiment of the process according to the present invention, the processing solvent has a viscosity at 25°C that is inferior to the viscosity of the swelling agent and wherein preferably the processing solvent has a viscosity of less than 500 mPa s at 25°C.

In a preferred embodiment of the process according to the present invention, the cellulosic fibrous material is allowed to swell in the non-aqueous process liquid for no more than four hours at 50°C.

In the process according to the present invention, a suspension of cellulosic fibrous material is provided in a continuous phase of a non-aqueous process liquid comprising a swelling agent and a processing solvent. The swelling agent and a processing solvent are preferably freely miscible and the non-aqueous process liquid forms a continuous phase of liquid in which the solid cellulosic fibrous material is suspended. The suspension of cellulosic fibrous material can be provided by for example combining either the swelling agent, the processing solvent or the non-aqueous process liquid with the cellulosic fibrous material in a vessel. The cellulosic fibrous material may for example be bleached hardwood sulphite pulp in sheet form which is first pulverized in a knife mill to a particle size of less than 1 mm and then inserted together with the non-aqueous process liquid in a heated hydropulper in which the suspension of cellulosic fibrous material in a continuous phase of a non-aqueous process liquid is formed through agitation.

In a preferred embodiment of the process according to the present invention, the suspension of cellulosic fibrous material in a continuous phase of a non-aqueous process liquid comprises of from 1 weight percent of cellulosic fibrous material to 6 weight percent of cellulosic fibrous material and/or the suspension of swollen cellulosic fibrous material in a continuous phase of a process solvent comprises of from 1 weight percent of cellulosic fibrous material to 4 weight percent of cellulosic fibrous material and preferably comprises of from 0.1 weight percent of cellulosic fibrous material to 2 weight percent of cellulosic fibrous material.

In the process according to the present invention, the cellulosic fibrous material is allowed to swell such as to form a suspension of swollen cellulosic fibrous material in a continuous phase of non-aqueous process liquid. The time required to achieve a certain degree of swelling may vary depending on the swelling agent. The amount of swelling may be monitored by for example by visual inspection of a sample in vial and comparing the sample to a reference sample. As the cellulose material swells, the volume of the cellulose increases and the height of the swollen cellulose in a vial after gravitational setting increases and can be compared to a reference sample. One such example may be found in the specification of EP 2 712 364 where a swelling index is computed. In a preferred embodiment of the process according to the present invention, the suspension of cellulosic fibrous material in non-aqueous process liquid comprising a swelling agent and a processing solvent can be agitated in order to reduce the time needed to achieve a certain degree of swelling. For instance, such agitation may be achieved in a hydropulper.

In the process according to the present invention, suspension of swollen cellulosic fibrous material in a continuous phase of non-aqueous process liquid can optionally be refined to increase the fineness of the swollen cellulosic fibrous material. Increasing the fineness of the swollen cellulosic fibrous material ensures a more robust operation of the microfluidizer in the ensuing process step, since in some cases the particle size of the swollen cellulosic fibrous is such that the processing module of the microfluidizer may become clogged after a certain time. In addition, most refiners such as disc refiners are optimized for accepting cellulose material having a particles size that is similar to the particle size of the swollen cellulosic fibrous material and thus, the increase in fineness of the swollen cellulosic fibrous material is particularly energy efficient. Suitable refiners are for example refiners having disk-shaped, cylindrical or conical refiner elements.

In the process according to the present invention, the swelling agent from the process liquid is removed such as to form a suspension of cellulosic fibrous material in a continuous phase of processing solvent. The removal of the swelling agent from the process liquid is removed before further processing of the cellulosic fibrous material can preferably be achieved by washing the suspension of swollen cellulosic fibrous material in a continuous phase of non-aqueous process liquid with processing solvent until the swelling agent is removed and a suspension of cellulosic fibrous material in a continuous phase of processing solvent is formed. The processing solvent can wash away the swelling agent because the swelling agent is chosen such as to be miscible with the swelling agent. It is understood that the processing solvent is processing solvent essentially free of water, i.e. a dry processing solvent, as water would be detrimental to obtaining an easily re-dispersable nanocellulose material.

In a preferred embodiment of the process according to the present invention, the processing solvent is chosen from esters of a hydroxyalkanaoic acids and from lower mono- or polyhydric alcohols such as propylene glycol. In the case where the processing solvent is chosen from esters of a hydroxyalkanaoic acids, it is preferably chosen from esters of α-hydroxycarboxylic acids such as for example esters of lactic acid. An example of an ester of lactic acid is ethyl lactate, preferably food-grade or pharmaceutically acceptable ethyl lactate.

In the process according to the present invention, the swollen and optionally refined cellulosic fibrous material is subjected to high-shear comminution such as to release of the non-derivatized or derivatized nanocellulose material from the swollen and optionally refined cellulosic fibrous material and such as to form a dispersion of non-derivatized or derivatized nanocellulose material in a continuous phase of a processing solvent. A suitable apparatus for subjecting the swollen and optionally refined cellulosic fibrous material to high-shear comminution can be a microfluidizer such as Microfluidizer Processor M-110-EH equipped with a 200 µm ceramic processor module arranged in series with a 100 µm diamond interaction chamber and operating at 25 000 psi, available from the Idex Corp.

In the process according to the present invention, the dispersion of non-derivatized nanocellulose material in a continuous phase of a processing solvent is contacted with a supercritical fluid such as to remove the processing solvent and isolate the non-derivatized nanocellulose material, wherein the supercritical fluid is preferably supercritical carbon dioxide or ammonia. As an example, the dispersion of non-derivatized nanocellulose material in a continuous phase of a processing solvent is contacted with a supercritical fluid such as to remove the processing solvent by spray-drying the dispersion of non-derivatized nanocellulose material in a continuous phase of a processing solvent with supercritical carbon dioxide or ammonia in suitable spray-drying apparatus. The processing solvent is chosen such that the processing solvent it is not only miscible with the swelling agent but it is also miscible with the supercritical fluid, and in particular with supercritical carbon dioxide or supercritical ammonia.

In a preferred embodiment of the process according to the present invention the dispersion of derivatized or non-derivatized nanocellulose material in a continuous phase of a processing solvent is contacted with a supercritical fluid to remove the processing solvent in a spray drying apparatus.

In a preferred embodiment of the process according to the present invention the derivatized or non-derivatized nanocellulose material is cellulose nanofiber (CNF).

It is another object of the present invention to provide a use of a non-aqueous process liquid comprising a swelling agent and a processing solvent in a process for the production of a derivatized or non-derivatized nanocellulose material according to the above, characterized in that the swelling agent is a low-transition-temperature mixture (LTTM) and in particular a deep eutectic solvent and said low-transition-temperature mixture (LTTM) and in particular said deep eutectic solvent is soluble in the processing solvent and wherein the processing solvent is non-solubilizing for the cellulosic fibrous material and the non-derivatized nanocellulose material.

It is yet another object of the present invention to provide a derivatized or non-derivatized nanocellulose material obtained by a process according the above, having an aspect ratio of at least 100 and wherein the non-derivatized nanocellulose material is preferably in the form of a powder.

### EXAMPLES

12.9 kg of urea and 15.1 kg of choline chloride were mixed in a rotary drum blender and then transferred to a vessel equipped with a heating jacket and a mixing impeller. The mixture of urea and choline was then stirred at 20 rpm and heated to a temperature of 70 °C, during which a single liquid swelling agent was obtained. To this, 7.0 kg of ethyl lactate as processing liquid were added gradually while continuously stirring.

To the thus obtained non-aqueous processing liquid, 750 g bleached hardwood sulphite dissolving pulp was added and the mixture was transferred into a hydropulper operating at 50 °C where the mixture of cellulose material and non-aqueous processing liquid was agitated for 4 hours in order to swell the cellulose material.

The resultant suspension of swollen cellulose material in non-aqueous processing liquid was then transferred into the holding vessel of a laboratory disc refiner and recirculated continuously. The calculated cumulative refining energy was equivalent to 800 kWh/tonne of cellulose and the processing gap was 100 microns.

To an aliquot of the resultant swollen and refined swollen cellulose material (500 g) was added ethyl lactate (250 g), with stirring until visually homogeneous. This mixture was then filtered under reduced pressure in a large sintered filter funnel (diameter 300 mm), before washing the filter cake carefully with further aliquots of ethyl lactate (5 x 250g).

A sample of the above filter cake was resuspended in the processing solvent ethyl lactate (1000 g) using a laboratory rotor-stator mixer to give a final cellulose solids content of 1% by weight. This suspension of cellulose material in processing solvent was then passed twice at 10000 psi through a M-110-EH Microfluidizer Processor (Idex Corp) fitted with a 200 micron ceramic auxiliary processing module. The sample was then given a further 3 passes through the 200 micron ceramic auxiliary processing module arranged in series with a 100 micron diamond interaction chamber at 25000 psi.

The resultant suspension of nanocellulose in ethyl lactate was dried in a benchtop spray drying apparatus (Feyecon Development and Implimentation BV) using supercritical carbon dioxide. The nanocellulose suspension and pressurized carbon dioxide were metered separately into a chamber, prior to being conveyed through a capillary into an enclosed chamber, where the solid nanocellulose was collected.
The nanocellulose used as comparative was prepared by first treating bleached softwood pulp in a mixture of urea/choline chloride (2:1 mol), washing with water and re-suspending in water, high shear processing as above and finally also spray drying directly from the water suspension.

The respectively obtained nanocellulose powders were re-dispersed into de-ionized water at a consistency of 1% by weight by mixing with a laboratory rotor-stator (Ultra Turrax IKA) for 15 mins at 12000 rpm. Viscometric data were collected using a TA Instruments AR-G2 rotational rheometer, fitted with a serrated concentric cylinder measuring geometry. A decelerating stress ramp experiment was performed.

The nanocellulose of the present invention was seen to produce a homogeneous structured gel on re-dispersion, whilst the nanocellulose obtained from spray drying the aqueous suspension was a mobile, low viscosity fluid which exhibited phase separation on standing.

As can be seen from the viscometric data presented in Fig. 1, the nanocellulose of the present invention (filled symbols) displays enhanced low shear viscosity and apparent yield stress when compared to the nanocellulose obtained from spray drying the aqueous suspension (open symbols).

### LIST OF REFERENCE SIGNS

none

## Claims

1. A process for the production of a non-derivatized nanocellulose material from a cellulosic fibrous material, comprising the steps of:
a. providing a suspension of cellulosic fibrous material in a continuous phase of a non-aqueous process liquid comprising a swelling agent and a processing solvent;
b. allowing the cellulosic fibrous material to swell such as to form a suspension of swollen cellulosic fibrous material in a continuous phase of non-aqueous process liquid;
c. optionally refining said suspension of swollen cellulosic fibrous material in a continuous phase of non-aqueous process liquid to increase the fineness of the swollen cellulosic fibrous material;
d. removing the swelling agent from the process liquid such as to form a suspension of cellulosic fibrous material in a continuous phase of processing solvent;
e. subjecting the swollen and optionally refined cellulosic fibrous material to high-shear comminution such as to release of the non-derivatized nanocellulose material from the swollen and optionally refined cellulosic fibrous material and such as to form a dispersion of non-derivatized nanocellulose material in a continuous phase of a processing solvent;
f. contacting the dispersion of non-derivatized nanocellulose material in a continuous phase of a processing solvent with a supercritical fluid such as to remove the processing solvent and isolate the non-derivatized nanocellulose material, wherein the supercritical fluid is preferably supercritical carbon dioxide or ammonia;
**characterized in that** the swelling agent is a low-transition-temperature mixture (LTTM) and in particular a deep eutectic solvent and said low-transition-temperature mixture and in particular said deep eutectic solvent is soluble in the processing solvent and wherein the processing solvent is non-solubilizing for the cellulosic fibrous material and the non-derivatized nanocellulose material.

2. The process according to claim 1, wherein the suspension of cellulosic fibrous material in a continuous phase of a non-aqueous process liquid comprises of from 1 weight percent of cellulosic fibrous material to 6 weight percent of cellulosic fibrous material and/or wherein the suspension of cellulosic fibrous material in a continuous phase of a process solvent comprises of from 0.1 weight percent of cellulosic fibrous material to 4 weight percent of cellulosic fibrous material and preferably of from 0.1 weight percent of cellulosic fibrous material to 2 weight percent of cellulosic fibrous material.

3. The process according to claim 1 or 2, wherein the non-aqueous process liquid comprises of from 50 to 95 weight percent, preferably of from 75 to 95 weight percent of swelling agent and/or from 5 to 50 weight percent, preferably of from 5 to 25 weight percent of processing solvent, based on the weight of the non-aqueous process liquid.

4. The process according to any preceding claim, wherein the non-derivatized nanocellulose material has an aspect ratio of at least 100.

5. The process according to any preceding claim, wherein the cellulosic fibrous material is allowed to swell in the non-aqueous process liquid for no more than four hours.

6. The process according to any preceding claim, wherein the processing solvent has a viscosity at 25°C that is inferior to the viscosity of the swelling agent and wherein preferably the processing solvent has a viscosity of less than 500 mPa s at 25°C.

7. The process according to any preceding claim, wherein the low-transition-temperature mixture (LTTM) and in particular the deep eutectic solvent is a binary low-transition-temperature mixture (LTTM) and in particular a binary deep eutectic solvent, and preferably is a binary deep eutectic solvent of a quaternary ammonium salt with a hydrogen bond donor, more preferably of a quaternary ammonium halide salt such as a choline halide with a hydrogen bond donor chosen from urea or ethanolamine.

8. The process for the production of a non-derivatized nanocellulose material according to any of the preceding claims, wherein the swelling agent is a binary deep eutectic solvent of choline chloride and urea or choline chloride and ethanolamine, wherein the choline chloride and urea or ethanolamine are present in a molar ratio of 1:2.

9. The process for the production of a non-derivatized nanocellulose material according to any of the preceding claims, wherein the swelling agent is a ternary deep eutectic solvent, and preferably is a ternary deep eutectic solvent of a quaternary ammonium salt such as choline halide with a binary hydrogen bond donor chosen from glycerol/DBN or glycerol/DBU in a molar ratio of 1:2:6.

10. The process for the production of a non-derivatized nanocellulose material according to any of the preceding claims, wherein the high-shear comminution imparts a shear of at least 8 x 10⁶ s⁻¹, preferably of from 34 x 10⁶ to 62 x 10⁶ s⁻¹.

11. The process for the production of a non-derivatized nanocellulose material according to any of the preceding claims, wherein the cellulosic fibrous material has a cellulose content of at least 90% by weight or is bleached wood pulp and preferably has a lignin content of less than 5% weight and preferably has a lignin content of less than 1% by weight.

12. The process for the production of a non-derivatized nanocellulose material according to any of the preceding claims, wherein the processing solvent is an ester of a hydroxyalkanaoic acid and an preferably an ester of a α-hydroxy carboxylic acid such as for example ethyl lactate or is a lower mono- or polyhydric alcohol such as propylene glycol.

13. The process for the production of a non-derivatized nanocellulose material according to any of the preceding claims, wherein the non-derivatized nanocellulose material is cellulose nanofiber (CNF).

14. The process for the production of a non-derivatized nanocellulose material according to any of the preceding claims, wherein the dispersion of non-derivatized nanocellulose material in a continuous phase of a processing solvent is contacted with a supercritical fluid to remove the processing solvent in a spray drying apparatus.

15. The use of non-aqueous process liquid comprising a swelling agent and a processing solvent in a process for the production of a non-derivatized nanocellulose material according to any of the preceding claims, **characterized in that** the swelling agent is a low-transition-temperature mixture (LTTM) and in particular a deep eutectic solvent and said low-transition-temperature mixture (LTTM) and in particular said deep eutectic solvent is soluble in the processing solvent and wherein the processing solvent is non-solubilizing for the cellulosic fibrous material and the non-derivatized nanocellulose material.

16. A non-derivatized nanocellulose material obtained by a process according to any of claims 1 to 14, having an aspect ratio of at least 100 and wherein the non-derivatized nanocellulose material is preferably in the form of a powder.

## Patentansprüche

1. Verfahren zur Herstellung von nicht-derivatisiertem Nanocellulosematerial aus einem cellulosischem Fasermaterial, umfassend die Schritte von:
a. Bereitstellen einer Suspension von cellulosischem Fasermaterial in einer kontinuierlichen Phase von einer nicht-wässrigen Prozessflüssigkeit umfassend ein Quellmittel und ein Prozesslösungsmittel;
b. Zulassen, dass das cellulosische Fasermaterial quillt, so dass eine Suspension von gequollenem cellulosischem Fasermaterial in einer kontinuierlichen Phase von einer nicht-wässrigen Prozessflüssigkeit gebildet wird;
c. Gegebenenfalls Mahlen der Suspension von gequollenem cellulosischem Fasermaterial in einer kontinuierlichen Phase einer nicht-wässrigen Prozessflüssigkeit, um den Mahlgrad des gequollenen cellulosischen Fasermaterials zu erhöhen;
d. Entfernen des Quellmittels aus der Prozessflüssigkeit, so dass eine Suspension von cellulosischem Fasermaterial in einer kontinuierlichen Phase eines Prozesslösungsmittels gebildet wird;
e. Unterziehen des gequollenen und gegebenenfalls gemahlenen cellulosischen Fasermaterials einer Hochscherzerkleinerung, so dass das nicht-derivatisierte Nanocellulosematerial aus dem gequollenen und gegebenenfalls gemahlenen cellulosischen Fasermaterial freigegeben wird und so dass eine Dispersion von nicht-derivatisiertem Nanocellulosematerial in einer kontinuierlichen Phase eines Prozesslösungsmittels gebildet wird;
f. Kontaktieren der Dispersion von nicht-derivatisiertem Nanocellulosematerial in einer kontinuierlichen Phase eines Prozesslösungsmittels mit einem überkritischen Fluid, so dass das Prozesslösungsmittel entfernt und das nicht-derivatisierte Nanocellulosematerial isoliert wird, wobei das überkritische Fluid vorzugsweise überkritisches Kohlendioxid oder Ammoniak ist;
**dadurch gekennzeichnet, dass** das Quellmittel eine Mischung mit niedriger Übergangstemperatur (LTTM) und insbesondere ein tiefes eutektisches Lösungsmittel ist und die Mischung mit niedriger Übergangstemperatur und insbesondere das tiefe eutektische Lösungsmittel im Prozesslösungsmittel löslich ist, und wobei das Prozesslösungsmittel für das cellulosische Fasermaterial und das nicht-derivatisierte Nanocellulosematerial nicht solubilisierend ist.

2. Verfahren gemäss Anspruch 1, wobei die Suspension von cellulosischem Fasermaterial in einer kontinuierlichen Phase von einer nicht-wässrigen Prozessflüssigkeit von 1 Gewichtsprozent an cellulosischem Fasermaterial bis 6 Gewichtsprozent an cellulosischem Fasermaterial umfasst und/oder wobei die Suspension von cellulosischem Fasermaterial in einer kontinuierlichen Phase von einem Prozesslösungsmittel von 0.1 Gewichtsprozent an cellulosischem Fasermaterial bis 4 Gewichtsprozent an cellulosischem Fasermaterial und vorzugsweise von 0.1 Gewichtsprozent an cellulosischem Fasermaterial bis 2 Gewichtsprozent an cellulosischem Fasermaterial umfasst.

3. Verfahren gemäss Anspruch 1 oder 2, wobei die nicht-wässrige Prozessflüssigkeit von 50 bis 95 Gewichtsprozent, vorzugsweise von 75 bis 95 Gewichtsprozent an Quellmittel und/oder von 5 bis 50 Gewichtsprozent, vorzugsweise von 5 bis 25 Gewichtsprozent an Prozesslösungsmittel, basierend auf dem Gewicht der nicht-wässrigen Prozessflüssigkeit umfasst.

4. Verfahren gemäss einem der vorhergehenden Ansprüche, wobei das nicht-derivatisierte Nanocellulosematerial ein Seitenverhältnis von mindestens 100 hat.

5. Verfahren gemäss einem der vorhergehenden Ansprüche, wobei dem cellulosischen Fasermaterial gestattet wird, während nicht mehr als vier Stunden in der nicht-wässrigen Prozessflüssigkeit zu quellen.

6. Verfahren gemäss einem der vorhergehenden Ansprüche, wobei das Prozesslösungsmittel eine Viskosität bei 25°C hat, welche weniger als die Viskosität des Quellmittels ist, und wobei das Prozesslösungsmittel vorzugsweise eine Viskosität von weniger als 500 mPa s bei 25°C hat.

7. Verfahren gemäss einem der vorhergehenden Ansprüche, wobei die Mischung mit niedriger Übergangstemperatur (LTTM) und insbesondere das tiefe eutektische Lösungsmittel eine binäre Mischung mit niedriger Übergangstemperatur (LTTM) und insbesondere ein binäres tiefes eutektisches Lösungsmittel ist, und vorzugsweise ein binäres tiefes eutektisches Lösungsmittel eines quaternären Ammoniumsalzes mit einem Wasserstoffbindungsdonor, insbesondere ein quaternäres Ammoniumhalogenidsalz wie ein Cholinhalogenid mit einem Wasserstoffbindungsdonor ausgewählt aus Harnstoff oder Ethanolamin ist.

8. Verfahren zur Herstellung von einem nicht-derivatisierten Nanocellulosematerial gemäss einem der vorhergehenden Ansprüche, wobei das Quellmittel ein binäres tiefes eutektisches Lösungsmittel aus Cholinchlorid und Harnstoff oder Cholinchlorid und Ethanolamin ist, wobei das Cholinchlorid und Harnstoff oder Ethanolamin in einem Molverhältnis von 1:2 vorhanden sind.

9. Verfahren zur Herstellung von einem nicht-derivatisierten Nanocellulosematerial gemäss einem der vorhergehenden Ansprüche, wobei das Quellmittel ein ternäres tiefes eutektisches Lösungsmittel, und insbesondere ein ternäres tiefes eutektisches Lösungsmittel aus einem quaternärem Ammoniumsalz wie Cholinhalogenid mit einem binären Wasserstoffbindungsdonor ausgewählt aus Glycerin / DBN oder Glycerin / DBU in einem Molverhältnis von 1:2:6 ist.

10. Verfahren zur Herstellung von einem nicht-derivatisierten Nanocellulosematerial gemäss einem der vorhergehenden Ansprüche, wobei die Hochscherzerkleinerung eine Scherung von mindestens 8 x 10⁶ s⁻¹, vorzugsweise von 34 x 10⁶ bis 62 x 10⁶ s⁻¹ verleiht.

11. Verfahren zur Herstellung von einem nicht-derivatisierten Nanocellulosematerial gemäss einem der vorhergehenden Ansprüche, wobei das cellulosische Fasermaterial einen Cellulosegehalt von mindestens 90 Gewichtsprozent hat oder gebleichter Zellstoff ist und vorzugsweise einen Ligningehalt von weniger als 5 Gewichtsprozent hat und vorzugsweise einen Ligningehalt von weniger als 1 Gewichtsprozent hat.

12. Verfahren zur Herstellung von einem nicht-derivatisierten Nanocellulosematerial gemäss einem der vorhergehenden Ansprüche, wobei das Prozesslösungsmittel ein Ester einer Hydroxyalkansäure und vorzugsweise ein Ester α-Hydroxycarbonsäure wie beispielsweise Ethyllactat ist oder ein niederer ein- oder mehrwertiger Alkohol wie Propylenglykol ist.

13. Verfahren zur Herstellung von einem nicht-derivatisierten Nanocellulosematerial gemäss einem der vorhergehenden Ansprüche, wobei das nicht-derivatisierte Nanocellulosematerial Cellulosenanofaser (CNF) ist.

14. Verfahren zur Herstellung von einem nicht-derivatisierten Nanocellulosematerial gemäss einem der vorhergehenden Ansprüche, wobei die Dispersion von nicht-derivatisiertem Nanocellulosematerial in einer kontinuierlichen Phase eines Prozesslösungsmittels mit einem überkritischen Fluid kontaktiert wird, um das Prozesslösungsmittel in einer Sprühtrocknungsvorrichtung zu entfernen.

15. Verwendung einer nicht-wässrigen Prozessflüssigkeit umfassend ein Quellmittel und ein Prozesslösungsmittel in einem Verfahren zur Herstellung von einem nicht-derivatisierten Nanocellulosematerial gemäss einem der vorhergehenden Ansprüche, **dadurch gekennzeichnet, dass** das Quellmittel eine Mischung mit niedriger Übergangstemperatur (LTTM) und insbesondere ein tiefes eutektisches Lösungsmittel ist und die Mischung mit niedriger Übergangstemperatur (LTTM) und insbesondere das tiefe eutektische Lösungsmittel im Prozesslösungsmittel löslich ist, und wobei das Prozesslösungsmittel für das cellulosische Fasermaterial und das nicht-derivatisierte Nanocellulosematerial nicht solubilisierend ist.

16. Nicht-derivatisiertes Nanocellulosematerial erhalten durch ein Verfahren gemäss einem der Ansprüche 1 bis 14, aufweisend ein Seitenverhältnis von mindestens 100, und wobei das nicht-derivatisierte Nanocellulosematerial vorzugsweise in Form eines Pulvers vorliegt.

## Revendications

1. Un procédé de production d'un matériau de nanocellulose non dérivatisé à partir d'un matériau fibreux cellulosique, comprenant les étapes consistant à:
a. fournir une suspension de matériau fibreux cellulosique dans une phase continue d'un liquide de traitement non aqueux comprenant un agent gonflant et un solvant de traitement;
b. permettre au matériau fibreux cellulosique de gonfler de manière à former une suspension de matériau fibreux cellulosique gonflé dans une phase continue de liquide de traitement non aqueux ;
c. raffiner éventuellement ladite suspension de matériau fibreux cellulosique gonflé dans une phase continue de liquide de traitement non aqueux pour augmenter la finesse du matériau fibreux cellulosique gonflé;
d. éliminer l'agent gonflant du liquide de traitement de manière à former une suspension de matériau fibreux cellulosique dans une phase continue de solvant de traitement ;
e. soumettre le matériau fibreux cellulosique gonflé et éventuellement raffiné à un broyage par cisaillement élevé de manière à libérer le matériau de nanocellulose non dérivatisé du matériau fibreux cellulosique gonflé et éventuellement raffiné et de manière à former une dispersion de matériau de nanocellulose non dérivatisé dans une phase continue d'un solvant de traitement;
f. mettre en contact la dispersion de matériau de nanocellulose non dérivatisé dans une phase continue d'un solvant de traitement avec un fluide supercritique de manière à éliminer le solvant de traitement et à isoler le matériau de nanocellulose non dérivatisé, le fluide supercritique étant de préférence du dioxyde de carbone ou de l'ammoniac supercritique;
**caractérisé en ce que** l'agent gonflant est un mélange à basse température de transition (LTTM) et en particulier un solvant eutectique profond et ledit mélange à basse température de transition et en particulier ledit solvant eutectique profond étant soluble dans le solvant de traitement et le solvant de traitement étant non solubilisant pour le matériau fibreux cellulosique et le matériau de nanocellulose non dérivatisé.

2. Un procédé selon la revendication 1, dans lequel la suspension de matériau fibreux cellulosique dans une phase liquide de traitement non aqueux comprend de 1% en poids de matériau fibreux cellulosique à 6% en poids de matériau fibreux cellulosique et/ou la suspension de matériau fibreux cellulosique dans une phase continue d'un solvant de traitement comprend de 0.1% en poids de matériau fibreux cellulosique à 4% en poids de matériau fibreux cellulosique est préférablement de 0.1% en poids de matériau fibreux cellulosique à 2% en poids de matériau fibreux cellulosique.

3. Le procédé selon la revendication 1 ou 2, dans lequel le liquide de traitement non aqueux comprend de 50 à 95% en poids, préférablement de 75 à 95% en poids d'agent gonflant et/ou de 5 à 50% en poids, préférablement de 5 à 25% en poids de solvant de traitement, à base du poids du liquide de traitement non aqueux.

4. Le procédé selon l'une quelconque des revendications précédentes, dans lequel le matériau nanocellulose non dérivatisé possède à rapport d'aspect d'au moins 100.

5. Le procédé selon l'une quelconque des revendications précédentes, dans lequel on permet le matériau fibreux cellulosique de gonfler dans le liquide de traitement non aqueux pour non plus que quatre heures.

6. Le procédé selon l'une quelconque des revendications précédentes, dans lequel le solvant de traitement possède une viscosité à 25°C qui est inférieure à la viscosité de l'agent gonflant ou préférablement le solvant de traitement possède une viscosité de moins de 500mPa s à 25°C.

7. Le procédé selon l'une quelconque des revendications précédentes, dans lequel le mélange à basse température de transition (LTTM), et en particulier le solvant eutectique profond est un mélange à basse température de transition (LTTM) binaire et en particulier un solvant eutectique profond binaire, et préférablement est un solvant eutectique profond binaire à partir d'un sel d'ammonium quaternaire avec un donneur de liaison hydrogène, plus préférablement d'un sel d'ammonium quaternaire de halogène comme par exemple un halogénure de choline avec un donneur de liaison hydrogène choisi parmi l'urée ou l'éthanolamine.

8. Le procédé pour la production d'un matériau de nanocellulose non dérivatisé selon l'une quelconque des revendications précédentes, dans lequel l'agent gonflant est un solvant eutectique profond binaire de chlorure de choline et urée ou chlorure de choline et éthanolamine, dans lequel le chlorure de choline et urée ou éthanolamine sont présents dans un rapport molaire 1:2.

9. Le procédé pour la production d'un matériau de nanocellulose non dérivatisé selon l'une quelconque des revendications précédentes, dans lequel l'agent gonflant est un solvant eutectique profond ternaire, préférablement est un solvant eutectique profond ternaire d'un sel d'ammonium quaternaire tel qu'un halogénure de choline avec un donneur de liaison hydrogène binaire choisi à partir de glycérol / DBN ou glycérol /DBU dans rapport molaire 1:2:6.

10. Le procédé pour la production d'un matériau de nanocellulose non dérivatisé selon l'une quelconque des revendications précédentes, dans lequel le broyage par cisaillement élevé induit un cisaillement d'au moins 8x 12⁶ s⁻¹, préférablement de 34x 10⁶ à 62x 10⁶ s⁻¹.

11. Le procédé pour la production d'un matériau de nanocellulose non dérivatisé selon l'une quelconque des revendications précédentes, dans lequel le matériau fibreux cellulosique a un contenu de cellulose d'au moins 90% en poids ou est de la pâte de bois blanchie et préférablement a un contenu de lignine de moins de 5% en poids et préférablement a un contenu de lignine de moins de 1% en poids.

12. Le procédé pour la production d'un matériau de nanocellulose non dérivatisé selon l'une quelconque des revendications précédentes, dans lequel le solvant de traitement est un ester d'un acide hydroxy alcanoïque et préférablement un ester d'un acide carboxylique portant un α-hydroxyle tel que par exemple le lactate d'éthyle ou est un alcool inférieur mono- ou polyhydrique tel que le propylène glycol.

13. Le procédé pour la production d'un matériau de nanocellulose non dérivatisé selon l'une quelconque des revendications précédentes, dans lequel le matériau de nanocellulose non dérivatisé est de la cellulose nano-fibrillée (CNF).

14. Le procédé pour la production d'un matériau de nanocellulose non dérivatisé selon l'une quelconque des revendications précédentes, dans lequel, dans laquelle la dispersion de matériau de nanocellulose non dérivatisé dans une phase continue d'un solvant de traitement est mis en contact avec un fluide supercritique pour éliminer le solvant de traitement dans un appareil à séchage par atomisation.

15. Utilisation d'un liquide de traitement non aqueux comprenant un agent gonflant et un solvant de traitement dans un procédé pour la production d'un matériau de nanocellulose non dérivatisé selon l'une quelconque des revendications précédentes, **caractérisée en ce que** l'agent gonflant est un mélange à basse température de transition (LTTM) et en particulier un solvant eutectique profond et ledit mélange à basse température de transition (LTTM) et en particulier ledit solvant eutectique profond est soluble dans le solvant de traitement et dans lequel le solvant de traitement est non solubilisant pour le matériau fibreux cellulosique et le matériau de nanocellulose non dérivatisé.

16. Un matériau de nano cellulose non dérivatisé obtenu par le procédé selon l'une quelconque des revendications 1 à 14, ayant un rapport d'aspect d'au moins 100 et dans lequel le matériau de nanocellulose non dérivatisé est préférablement en forme d'une poudre.
